# EUROPÄISCHE PATENTSCHRIFT

(11) **EP 2 940 911 B1**
(45) Veröffentlichungstag und Bekanntmachung des Hinweises auf die Patenterteilung: **15.11.2023**
(21) Anmeldenummer: 14001540.5
(22) Anmeldetag: 02.05.2014
(51) Int. Cl.: H04J 14/02

(54) **Optisches Übertragungsnetzwerk und optische Netzelemente zum Übertragen von WDM-Signalen**
Optical transmission network and optical network elements for transmitting WDM signals
Réseau de transmission optique et éléments de réseau optique destinés à la transmissions de signaux WDM

(43) Veröffentlichungstag der Anmeldung: 04.11.2015
(73) Patentinhaber: Deutsche Telekom AG, 53113 Bonn (DE)
(72) Erfinder: Gunkel, Matthias, DE-64291 Darmstadt (DE); Weiershausen, Werner, DE-64859 Eppersthausen (DE)
(74) Vertreter: Blumbach · Zinngrebe Patentanwälte PartG mbB

(56) Entgegenhaltungen:
- EP-A2- 1 128 585
- EP-A2- 1 349 308
- WO-A1-02/054629
- WO-A2-02/075371
- US-A1- 2011 097 080
- US-B1- 7 072 584
- GUNKEL MATTHIAS: "Multi-layer restoration - the impact on the optical layer", OFC 2014, OSA, 9 March 2014 (2014-03-09), pages 1-3, XP032633115, DOI: 10.1109/OFC.2014.6886760
- MUNOZ F ET AL: "Multi-layer restoration in hierarchical IP/MPLS over WSON networks", NETWORKS AND OPTICAL COMMUNICATIONS (NOC), 2012 17TH EUROPEAN CONFERENCE ON, IEEE, 20 June 2012 (2012-06-20), pages 1-6, XP032211549, DOI: 10.1109/NOC.2012.6249955 ISBN: 978-1-4673-0949-3

## Beschreibung

Die Erfindung betrifft allgemein die Datenübertragung mittels optischer Signale, und insbesondere ein optisches Übertragungsnetzwerk zum Übertragen optischer Signale im Wellenlängen-Multiplexbetrieb, sowie optische Netzelemente zum Einsatz in einem solchen Übertragungsnetzwerk.

Das IP-Netz eines Netzbetreibers umfasst typischerweise ein überregionales Backbone-Netz, welches eine Mehrzahl vermaschter Backbone-Netzknoten umfasst, sowie Aggregationsnetze für Privatkundenverkehr, welche die Aufgabe haben, Verkehr von Regionalknoten zu Backbone-Knoten zu führen. Backbone- und Aggregationsnetze sind heute in der Regel als optische Übertragungsnetzwerke zum Übertragen optischer Signale im Wellenlängen-Multiplexbetrieb ausgebildet.

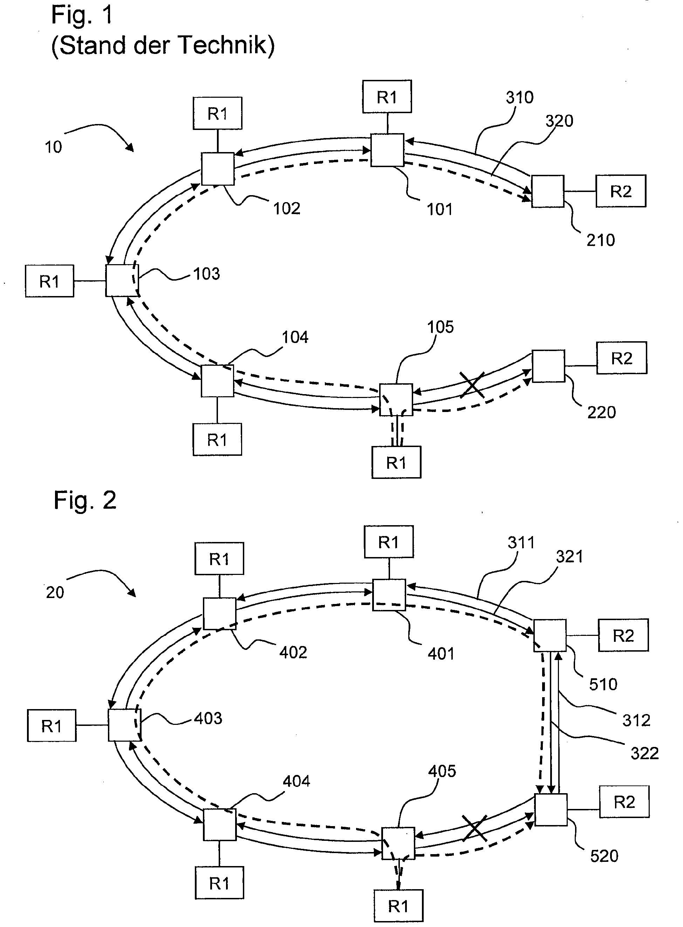

Heutige Aggregationsnetze bestehen auf dem optischen Layer beispielsweise aus fest eingestellten optischen Add/Drop-Knoten, auch als FOADM (Fixed Optical Add/Drop Multiplexer) bezeichnet. In Fig. 1 ist ein solches Aggregationsnetz 10 beispielhaft schematisch dargestellt. Zur Absicherung gegen den Ausfall eines Backbone-Knotens umfasst das beispielhafte Aggregationsnetz zwei als R2 bezeichnete Backbone-Knoten, die jeweils über ein optisches Netzelement 210 bzw. 220 an das optische Aggregationsnetzwerk angebunden sind, sowie eine Mehrzahl von als R1 bezeichneten Regionalknoten, welche jeweils über eines der in diesem Beispiel als FOADM ausgebildeten optischen Netzelemente 101 bis 105 an das optische Aggregationsnetzwerk angebunden sind. Die optischen Netzelemente sind in einer offenen Ringstruktur angeordnet, auch als Horseshoe (Hufeisen) bezeichnet. Die Fasertopologie ist bidirektional ausgeführt, d.h. zwei benachbarte optische Netzelemente, im Folgenden auch als optische Knoten bezeichnet, sind in beide Richtungen über Glasfasern miteinander verbunden, beispielhaft mit Bezugszeichen 310 und 320 bezeichnet.

Die beiden Backbone-Knoten sind so dimensioniert, dass bei Ausfall eines der beiden Backbone-Knoten der andere Backbone-Knoten den gesamten IP-Datenverkehr zu und von den Regionalknoten verarbeiten kann.

Falls eine Glasfaser unterbrochen werden sollte, wie in Fig. 1 durch ein Kreuz symbolisiert, können von den Regionalknoten keine Signale mehr zu dem an das optische Netzelement 220 angebundenen Backbone-Knoten gesendet werden. Die Horseshoes unterliegen einer ständigen Überwachung auf mögliche Ausfälle und jeder optische Knoten ist in ein Netzmanagement-System integriert. Bei Erkennen einer solchen Unterbrechung einer Glasfaser kann daher, wie beispielhaft durch gestrichelte Linine angedeutet, der an das optische Netzelement 105 angebundene Regionalknoten alternativ Signale zu dem an das optische Netzelement 210 angebundenen Backbone-Knoten senden. Zu diesem Zweck erfolgt ein Re-Routing auf dem IP-Layer. Das Umrouten zwischen Backbone-Knoten im Fall einer Verbindungsunterbrechung in der Optik erfordert jedoch einen hohen betrieblichen Aufwand. Hinzu kommt, dass aus Kostensicht hierzu gedoppelte Schnittstellen, d.h. gedoppelte Sende-und Empfangselemente, vorhanden sein müssen.

Ein Aggregationsnetzwerk wie oben beschrieben, bei dem die optischen Netzelemente der Regionalknoten als FOADMs ausgebildet sind, ist kostengünstig realisierbar und erlaubt einen relativ sparsamen Umgang mit Wellenlängen, da Wellenlängen auf dem gesamten Ring für Nutzverkehr verwendet werden können, da Add/Drop-Verkehre an den Knoten über Filter spektral separiert am Ring ein- und ausgekoppelt werden. Dadurch werden Wellenlängenblockierungen vermieden, d.h. einzelne Wellenlängen können auf verschiedenen Ringsegmenten wiederverwendet werden.

Ein solches Aggregationsnetzwerk weist aber wenig Flexibilität hinsichtlich sich ändernder Verkehrsprognosen auf. Zudem ist die maximale Verkehrslast auf den Schnittstellen der Backbone-Knoten, d.h. den Sende- und Empfangselementen, zur Gewährleistung einer Absicherung gegen einen Faserbruch oder den Ausfall eines Backbone-Knotens auf 50% der Nominalkapazität begrenzt. Weiterhin müssen die Regionalknoten in ein Netzmanagement-System eingebunden sein, wodurch sich die Komplexität des Systems erhöht. Ferner können Störungen nur auf dem IP-Layer kompensiert werden, wobei das Umrouten zwischen Backbone-Knoten auf dem IP-Layer im Fall einer Verbindungsunterbrechung in der Optik einen hohen Aufwand erfordert.

Eine Alternative ist der Einsatz optisch passiver Knotentechnik, bei der nur optische Splitter und Koppler sowie Verstärker eingesetzt werden, wobei eine wellenlängenselektive Filterung nicht zum Einsatz kommt. Die beiden Transportrichtungen auf dem Horseshoe sind getrennt, d.h. eine einzelne Wellenlänge wird immer nur in eine Richtung, im Uhrzeigersinn oder gegen den Uhrzeigersinn, auf dem Horseshoe übertragen. Die jeweilige Wellenlänge ist in Flussrichtung vom Regional- zum Backbone-Knoten theoretisch an allen weiteren Regionalknoten prinzipbedingt auswertbar, auch wenn sie nur am Backbone-Knoten ausgewertet werden soll. In entgegengesetzter Flussrichtung, vom Backbone-Knoten zu einem Regionalknoten, ist die Wellenlänge ebenfalls überall prinzipbedingt auswertbar.

Die Auswertung erfolgt durch den heute verfügbaren kohärenten Empfang mittels einem Tunen eines Lokallasers, entsprechend dem bekannten Prinzip beim UKW-Radio.

In dieser Alternative wird in allen optischen Knoten, sowohl die an den Regionalknoten als auch die an den Backbone-Knoten, eine passsive Splitter/Koppler-Technik eingesetzt. Durch den Einsatz von passiven Splittern und Kopplern wird das Netzmanagement deutlich einfacher, da auf die Integration der optischen Knotentechnik im Netzmanagement-System verzichtet werden kann.

Diese Architekturvariante bietet einige Vorteile. So stellen die verwendeten Splitter und Koppler eine der kostengünstigsten, starren Layer 0-Technologien dar. Diese Architekturvariante bietet zudem eine hohe Flexibilität bei sich ändernden Verkehrsanforderungen wegen des "Broadcasts" aller Wellenlängen in Flussrichtung zum Backbone-Knoten. Mit besonderem Vorteil ist diese Architektur insbesondere geeignet für zukünftige Übertragungsraten von 400 GBit bzw. 1 TBit, da keinerlei starr festgelegte optische Filterungsfunktion zur Anwendung kommt, wie dies ansonsten bei einem Wellenlängenraster von 50 GHz oder 100 GHz gemäß ITU-T Standard G.694.1 üblicherweise der Fall ist. Zudem sind die optischen Knoten nicht im Netzmanagement-System eingebunden, was zu einer Komplexitätsreduktion führt. Ferner ist eine Intra-Ring-Kommunikation, d.h. zwischen den einzelnen Regionalknoten, theoretisch möglich, und auch Multicast- und Broadcast-Betrieb ist auf einfache Weise möglich.

Diese Architekturvariante wurde aufgrund der beschriebenen Vorteile bereits in einem Feldversuch untersucht und als machbar bestätigt.

Jedoch bietet diese auf passiven optischen Komponenten basierende Architektur auch Nachteile.

Verglichen mit dem weiter oben beschriebenen FOADM-Konzept ist bei dieser Architekturvariante auf Seiten der Backbone-Knoten ein Zusatzaufwand durch den Einsatz optischer Verstärker erforderlich, um die Verluste durch die verwendeten Splitter und Koppler auszugleichen. Ferner führt die extensive Verwendung von optischen Wellenlängen zu einer früheren Erschöpfung der Gesamtkapazität der Netzstruktur. Da zum Zweck einer hohen Flexibilität bezüglich zukünftiger Übertragungsraten und Kanalbreiten auf eine Kanaltrennung durch optische Filter verzichtet wird, ist zudem nur ein kohärenter Empfang möglich.

Ferner können auch bei dieser Architektur Verbindungsunterbrechungen in der Optik nur auf dem IP-Layer kompensiert werden, wobei das Umrouten zwischen Backbone-Knoten auf dem IP-Layer einen hohen Aufwand bedeutet. Die maximale Verkehrslast auf den Schnittstellen der Backbone-Knoten ist somit auch hier auf 50% der Nominalkapazität begrenzt, um Reserven für Fehlerfälle vorzuhalten.

Eine denkbare weitere Alternative besteht im Einsatz einer optisch aktiven Knotentechnik zur Anbindung der Regionalknoten, bei der aktive WSS (Wavelength-Selective Switches) zum Einsatz kommen, d.h. eine adaptive wellenlängenselektive Filterung.

Im Fall eines einzelnen Faserbruchs können Wellenlängen über den noch intakten Teil des Horseshoes zu einem der beiden Backbone-Knoten geführt werden, wobei diese Umlenkung in dieser Architekturvariante auf dem optischen Layer erfolgt. Der Umlenkungsvorgang der optischen Kanäle zum noch erreichbaren Backbone-Knoten benötigt allerdings eine gewisse Zeit, die zum optischen Einpegeln der Zwischenknoten erforderlich ist. Da in dieser Zeit - bis zu ca. einer Minute - keine Verbindung zwischen den betroffenen Regionalknoten und den Backbone-Knoten möglich ist, erfolgt praktischerweise die Ersatzschaltung auf der IP-Ebene. So können auch für hoch-priorisierte IP-Verkehre die Service-Level Agreements eingehalten werden.

Speziell QoS-Verkehre tolerieren nur sehr kurze Verbindungsausfallzeiten von beispielsweise bis zu 50 ms. Um innerhalb einer solch kurzen Zeitdauer eine erneute Konnektivität zwischen Backbone-Knoten und Regionalknoten zu gewährleisten, dürfen die Schnittstellen prinzipbedingt nur jeweils mit einer Verkehrslast von bis zu 50% der Nominalkapazität beladen werden. Es müssen also dann vom ersten Betriebstag an, gedoppelte Schnittstellen, d.h. gedoppelte Sende- und Empfangselemente, an jedem Netzkoten eingesetzt werden.

Sofern man bereit wäre, einen Konnektivitätsausfall zwischen Backbone-Knoten und Regionalknoten von bis zu ca. einer Minute zu tolerieren, könnte die weiterhin funktionsfähige Schnittstelle am Regionalknoten nun über den nicht ausgefallenen Teil des Horseshoes verbunden werden. Hierzu wäre lediglich eine weitere Schnittstelle am redundanten Backbone-Knoten vorzuhalten. Dieser Ansatz wird als MLR-A (Multi-Layer Restoration from IP aggregation node failure) bezeichnet und erlaubt eine Schnittstellen-Einsparung von bis zu 25% gegenüber dem üblichen Ansatz, auf Multi-Layer Resilience gänzlich zu verzichten.

Diese Architekturvariante bietet zusätzlich den Vorteil einer sparsamen Verwendung von optischen Wellenlängen sowie eine hohe Flexibilität bei sich ändernden Verkehrsanforderungen. Ferner ist eine Intra-Ring-Kommunikation, d.h. zwischen den einzelnen Regionalknoten, theoretisch möglich, und auch Multicast- und Broadcast-Betrieb ist auf einfache Weise möglich.

Insbesondere können bei dieser Architektur Verbindungsunterbrechungen in der Optik nicht nur auf dem IP-Layer kompensiert werden, sondern auch mittels optischen Gegenmaßnahmen durch Multi-Layer Restoration.

Diese Architekturvariante mit Einsatz optisch aktiver Knotentechnik wird jedoch aufgrund der sehr aufwändigen Technik und der damit verbundenen hohen Kosten heute nicht eingesetzt.

Optische Übertragungsnetzwerke nach dem Stand der Technik sind aus folgenden Dokumenten bekannt: WO 02/054629 A1, US 7 072 584 B1, WO 02/075371 A2, EP 1 128 585 A2, EP 1 349 308 A2, US 2011/097080 A1.

Es ist daher die Aufgabe der vorliegenden Erfindung, einen Weg aufzuzeigen, wie die oben beschriebenen Nachteile im Stand der Technik reduziert oder vermieden werden können, und insbesondere einen alternativen Aufbau eines optischen Übertragungsnetzwerks vorzuschlagen bzw. ein gegenüber dem Stand der Technik vereinfachtes und/oder verbessertes optisches Übertragungsnetzwerk anzugeben.

Die oben genannte technische Aufgabe wird durch ein optisches Übertragungsnetzwerk gemäß Anspruch 1, ein optisches Netzelement gemäß Anspruch 11, sowie durch einen rekonfigurierbaren optischen Add/Drop-Multiplexer gemäß Anspruch 12 gelöst. Vorteilhafte Ausführungsformen sind Gegenstand der abhängigen Ansprüche.

Ein erfindungsgemäßes optisches Übertragungsnetzwerk zum Übertragen optischer Signale im Wellenlängen-Multiplexbetrieb umfasst eine Mehrzahl optischer Netzelemente, die als Ringnetzwerk angeordnet sind, wobei benachbarte optische Netzelemente jeweils über eine bidirektionale optische Übertragungsleitung miteinander verbunden sind. Durch die bidirektionalen Übertragungsleitungen entlang des Ringnetzwerks wird ein erster und ein zweiter, zum ersten gegenläufiger optischer Signalweg gebildet. Das optische Übertragungsnetzwerk umfasst wenigstens ein erstes optisches Netzelement, welches dazu ausgebildet ist, mittels passiver optischer Koppler ein optisches Wellenlängenmultiplexsignal gleichzeitig in beide optische Signalwege einzukoppeln, wobei zu diesem Zweck ein einzukoppelndes optisches Wellenlängenmultiplexsignal vorzugsweise mit Hilfe eines optischen Teilers in zwei identische optische Signale aufgeteilt wird, von denen je eines einem von zwei optischen Kopplern zugeführt wird, welcher das Signal in den jeweiligen Signalweg einkoppelt. Jedes der ersten optischen Netzelemente ist ferner dazu ausgebildet, mittels passiver optischer Teiler jeweils ein optisches Wellenlängenmultiplexsignal aus jedem der beiden Signalwege auf dem Ring auszukoppeln und automatisch eines der ausgekoppelten optischen Wellenlängenmultiplexsignale zur Weiterverarbeitung auszuwählen. Ferner umfasst das optische Übertragungsnetzwerk wenigstens ein zweites optisches Netzelement, welches als rekonfigurierbarer optischer Add/Drop-Multiplexer (ROADM, Reconfigurable Optical Add/Drop Multiplexer) ausgebildet ist, und welches ferner ebenfalls dazu ausgebildet ist, jeweils ein optisches Wellenlängenmultiplexsignal aus jedem der beiden Signalwege auf dem Ring auszukoppeln und automatisch eines der ausgekoppelten optischen Signale zur Weiterverarbeitung auszuwählen. Die zweiten optischen Netzelemente sind derart konfiguriert, dass der erste und zweite Signalweg für jede verwendete Übertragungs-Wellenlänge in wenigstens einem der zweiten optischen Netzelemente unterbrochen wird, um durch Lasereffekte auftretende physikalische Instabilitäten zu vermeiden.

Das optische Übertragungsnetzwerk kann insbesondere zur Anbindung von Netzknoten an hierarchisch übergeordnete Netzstrukturen eingesetzt werden. Dementsprechend ist an die ersten optischen Netzelemente vorzugsweise ein erster Netzknoten-Typ angeschlossen und an die zweiten optischen Netzelemente ein zweiter Netzknoten-Typ, wobei der zweite Netzknoten-Typ dem ersten Netzknoten-Typ hierarchisch übergeordnet ist.

In einer besonders vorteilhaften Ausführungsform wird das optische Übertragungsnetzwerk als ein an ein Backbone-Netzwerk angebundenes Aggregationsnetzwerk eingesetzt. Zu diesem Zweck ist vorteilhaft an jeden der ersten optischen Netzelemente ein Regionalknoten eines IP-Netzwerks zur Aggregation von Signalen einer Mehrzahl von Endnutzern angebunden und an jeden der zweiten optischen Netzelemente ein Backbone-Knoten, welcher Bestandteil eines übergeordneten IP-Backbone-Netzwerks ist. In analoger Weise können aber beispielsweise auch an die ersten optischen Netzelemente jeweils ein Kundenknoten und an die zweiten optischen Netzelemente jeweils ein Regionalknoten eines IP-Netzes angebunden sein.

Die ersten und/oder zweiten optischen Netzelemente umfassen zum automatischen Auswählen eines der ausgekoppelten optischen Signale vorzugsweise wenigstens einen optischen Schalter mit zwei Eingängen und einem Ausgang, wobei je eines der ausgekoppelten optischen Signale einem der Eingänge zugeführt wird, und wobei das jeweilige optische Netzelement dazu ausgebildet ist, in Abhängigkeit der ausgekoppelten optischen Signale automatisch einen der Eingänge mit dem Ausgang zu verbinden.

Ein Kerngedanke der Erfindung besteht darin, ein hybrides optisches Übertragungsnetzwerk mit einer geschlossenen Ringstruktur aus unterschiedlichen optischen Netzelementen aufzubauen, welches insbesondere als Aggregationsnetzwerk eines IP-Netzes eingesetzt werden kann, welches ein vereinfachtes Schutzkonzept auf dem physikalischen Layer, d.h. auf dem optischen Layer, ermöglicht.

Mit anderen Worten ist ein Grundgedanke der Erfindung, insbesondere für den Einsatz in einem Aggregationsnetzwerk optische Netzelemente, die mit passiven optischen Teilern und Kopplern aufgebaut sind, mit als ROADM ausgebildeten optischen Netzelementen zu kombinieren und statt einer Horseshoe-Topologie eine geschlossene Ringstruktur vorzusehen, wobei die optischen Netzelemente insbesondere jeweils zusätzlich einen schnellen optischen Schalter umfassen, welcher aber nicht durch ein Netzmanagement-System, sondern direkt über die anliegenden Signalpegel gesteuert wird.

Das erfindungsgemäße optische Übertragungsnetzwerk bietet damit bezüglich der ersten optischen Netzelemente die oben beschriebenen Vorteile eines einfachen technischen Aufbaus, wobei insbesondere auf die Integration der optischen Knotentechnik im Netzmanagement-System verzichtet werden kann.

Durch die Ausführung der zweiten optischen Netzelemente als ROADM und durch den Ringschluss, d.h. durch den Einsatz eines geschlossenen Ringnetzwerks statt einer Horseshoe-Topologie, ergeben sich Einsparpotentiale, da aufgrund der automatischen Selbstheilung auf dem optischen Layer die Schnittstellen, d.h. die Sende- und Empfangselemente, mit 100% ihrer Nominalkapazität belastet werden können und somit die Netz-Effizienz signifikant gesteigert werden kann.

Das optische Übertragungsnetzwerk umfasst typischerweise eine Mehrzahl erster optischer Netzelemente, an welche jeweils ein Netzknoten angeschlossen ist. Erfindungsgemäß umfasst das optische Übertragungsnetzwerk ferner zwei zweite optische Netzelemente, an welche jeweils ein hierarchisch übergeordneter Netzknoten angeschlossen ist, wobei in einer besonders vorteilhaften Ausführungsform genau zwei zweite optische Netzelemente vorgesehen sind. In dieser Ausführungsform wird vorteilhaft auf die zwei hierarchisch übergeordneten Netzknoten der IP-Datenverkehr zu und von den anderen Netzknoten verteilt, beispielsweise auf Basis eines vorgegebenen Lastverteilungs-Algorithmus. Bei Ausfall eines der beiden hierarchisch übergeordneten Netzknoten kann der Datenverkehr vom anderen weitgehend übernommen werden, wobei dies ein Re-Routing auf dem IP-Layer erfordert. Bevorzugt sind die zwei zweiten optischen Netzelemente an räumlich getrennten Standorten mit einem Abstand von vorzugsweise mehreren Kilometern angeordnet, um einen gleichzeitigen Ausfall bei bestimmten Fehlerszenarien wie zum Beispiel der Durchtrennung eines Erdkabels bei Straßenbauarbeiten zu vermeiden.

Im einfachsten Fall kann das optische Übertragungsnetzwerk nur ein erstes und ein zweites optisches Netzelement umfassen, wobei in diesem Fall dieses einzige erste optische Netzelement über zwei bidirektionale optische Übertragungsleitungen mit dem einzigen zweiten optischen Netzelement verbunden ist, da dieses in beide Richtungen das jeweils benachbarte optische Netzelement ist. Der Einsatz von mehr als zwei zweiten optischen Netzelementen ist prinzipiell denkbar, bietet jedoch keine wesentlich erhöhte Ausfallsicherheit.

Zum automatischen Auswählen eines der ausgekoppelten optischen Signale sind die ersten und/oder zweiten optischen Netzelemente vorzugsweise dazu ausgebildet, die Signalpegel der ausgekoppelten optischen Signale zu messen und zu vergleichen und in Abhängigkeit des Vergleichsergebnisses den optischen Schalter derart anzusteuern, dass der Eingang des optischen Schalters automatisch mit dem Ausgang verbunden wird, an welchem das optische Signal mit dem höheren Signalpegel anliegt. Im Fall eines Faserbruchs entlang eines der optischen Signalwege fällt der entsprechende Signalpegel am Eingang des Schalters ab, wodurch automatisch der jeweils andere Eingang durchgeschaltet wird und so auch im Fehlerfall ein auswertbares optisches Wellenlängenmultiplexsignal am Ausgang des Schalters bereitgestellt wird.

Um die Schaltsicherheit zu erhöhen, sind die ersten und/oder zweiten optischen Netzelemente vorteilhaft dazu ausgebildet, die ausgekoppelten optischen Signale mittels optischer Filter zu filtern und die Signalpegel der gefilterten optischen Signale zu messen und zu vergleichen und in Abhängigkeit des Vergleichsergebnisses den optischen Schalter derart anzusteuern, dass automatisch der Eingang des optischen Schalters mit dem Ausgang verbunden wird, an welchem das optische Signal anliegt, welches nach Filtern einen höheren Signalpegel aufweist, wobei die optischen Filter derart konfigurierbar sind, dass nur Wellenlängen durchgelassen werden, die von einem der zweiten optischen Netzelemente, d.h. von einem der hierarchisch übergeordneten Netzknoten, in das Ringnetzwerk eingespeist werden.

Durch die Filterung werden Signale, welche von den an die ersten optischen Netzelemente angeschlossenen Netzknoten eingespeist werden oder von einem der zweiten optischen Netzelemente weitergeleitet werden, bei der Pegelmessung nicht berücksichtigt. Auf diese Weise kann besonders sicher erkannt werden, ob der jeweilige Signalweg zwischen dem einspeisenden hierarchisch übergeordneten Netzknoten und dem Schalter an irgendeiner Stelle unterbrochen ist, da der Signalpegel des gefilterten Signals in diesem Fall auf Null fällt.

Die eingesetzten optischen Schalter können bevorzugt als MEMS-basierte optische Schalter, d.h. unter Verwendung eines MEMS (Microelectromechanical system), ausgebildet sein, da mit einem solchen Schalteraufbau sehr kurze Schaltzeiten erreichbar sind. Es liegt aber auch jede andere geeignete Bauart eines optischen Schalters im Rahmen der Erfindung, welche eine ausreichend kurze Schaltzeit gewährleistet. Besonders vorteilhaft weisen die eingesetzten optischen Schalter eine Schaltzeit unter 100 ms, insbesondere unter 50 ms, insbesondere unter 20 ms, auf, so dass auch für hoch-priorisierte IP-Verkehre die Service-Level Agreements eingehalten werden können.

Ein besonderer Vorteil eines erfindungsgemäßen optischen Übertragungsnetzwerks besteht darin, dass die ersten optischen Netzelemente aufgrund des Einsatzes passiver optischer Bauelemente und des Verzichts auf eine starr festgelegte optische Filterungsfunktion keine Einschränkungen hinsichtlich der Kanalbreiten der eingesetzten Übertragungskanäle und damit hinsichtlich der Übertragungsraten bieten und somit ohne Weiteres für zukünftige Übertragungsraten von 400 GBit bzw. 1 TBit geeignet sind.

Um auch die zweiten optischen Netzelemente hinsichtlich der Kanalbreiten der eingesetzten Übertragungskanäle und damit hinsichtlich der Übertragungsraten flexibel auszubilden, sind die zweiten optischen Netzelemente vorzugsweise als spektral flexible rekonfigurierbare optische Add/Drop-Multiplexer ausgebildet, welche sogenannte "flexgrid" oder "gridless" WSS (Wellenlängen-selektiver Schalter; Wavelength Selective Switch) umfassen. Diese aktiven optischen Bauelemente sind Wellenlängen-selektive Schalter ohne starr vorgegebenes Wellenlängen-Raster, die beispielsweise auf der der Konsumerelektronik entstammenden LCoS-Technologie (Liquid Crystal on Silicon) oder DLP-Technologie (Digital Light Processing) basieren und die in ihren spektralen Eigenschaften auf einer Granularität von bis zu wenigen GHz beliebig gesteuert werden können, so dass spektrale Schaltfenster in einem weiten Rahmen elektronisch konfigurierbar sind.

Im Rahmen der Erfindung liegen auch die in dem oben beschriebenen optischen Übertragungsnetzwerk eingesetzten optischen Netzelemente.

Dementsprechend ist ein erstes erfindungsgemäßes optisches Netzelement zum Einsatz in einem optischen Übertragungsnetzwerk wie oben beschrieben dazu ausgebildet, mittels passiver optischer Koppler ein optisches Wellenlängenmultiplexsignal gleichzeitig in einen ersten und einen zweiten, zum ersten gegenläufigen optischen Signalweg des optischen Übertragungsnetzwerks einzukoppeln, und mittels passiver optischer Teiler jeweils ein optisches Wellenlängenmultiplexsignal aus jedem der beiden Signalwege auszukoppeln und automatisch eines der ausgekoppelten optischen Wellenlängenmultiplexsignale zur Weiterverarbeitung auszuwählen.

Ein erfindungsgemäßer rekonfigurierbarer optischer Add/Drop-Multiplexer zum Einsatz in einem optischen Übertragungsnetzwerk wie oben beschrieben ist dazu ausgebildet, jeweils ein optisches Wellenlängenmultiplexsignal aus einem ersten und einem zweiten, zum ersten gegenläufigen optischen Signalweg des optischen Übertragungsnetzwerks auszukoppeln und automatisch eines der ausgekoppelten optischen Signale zur Weiterverarbeitung auszuwählen.

Ferner liegen auch alle oben im Zusammenhang mit dem optischen Übertragungsnetzwerk beschriebenen Ausführungsformen optischer Netzelemente ebenfalls im Rahmen der Erfindung.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung eines beispielhaften Aufbaus eines aus dem Stand der Technik bekannten Aggregationsnetzwerks,
- Fig. 2: eine schematische Darstellung einer bevorzugten Ausführungsform eines erfindungsgemäßen optischen Übertragungsnetzwerks,
- Fig. 3: eine schematische Darstellung einer ersten bevorzugten Ausführungsform eines ersten in Fig. 2 dargestellten optischen Netzelementes,
- Fig. 4: eine schematische Darstellung einer ersten bevorzugten Ausführungsform eines zweiten in Fig. 2 dargestellten optischen Netzelementes,
- Fig. 5: eine schematische Darstellung einer zweiten bevorzugten Ausführungsform eines zweiten in Fig. 2 dargestellten optischen Netzelementes,
- Fig. 6: eine schematische Darstellung einer dritten bevorzugten Ausführungsform eines zweiten in Fig. 2 dargestellten optischen Netzelementes,
- Fig. 7: eine schematische Darstellung einer vierten bevorzugten Ausführungsform eines zweiten in Fig. 2 dargestellten optischen Netzelementes,
- Fig. 8: eine schematische Darstellung einer zweiten bevorzugten Ausführungsform eines ersten in Fig. 2 dargestellten optischen Netzelementes,
- Fig. 9: eine schematische Darstellung einer dritten bevorzugten Ausführungsform eines ersten in Fig. 2 dargestellten optischen Netzelementes, und
- Fig. 10: eine schematische Darstellung einer weiteren bevorzugten Ausführungsform eines erfindungsgemäßen optischen Übertragungsnetzwerks.

Fig. 1 zeigt ein aus dem Stand der Technik bekanntes Aggregationsnetzwerk 10, welches eine Horseshoe-Topologie aufweist. Eine Mehrzahl von Regionalknoten R1 sind über optische Netzelemente 101-105 an das optische Übertragungsnetzwerk angebunden. Die Enden des Horseshoes bilden zwei Backbone-Knoten R2, die über optische Netzelemente 210 und 220 angebunden sind. Die Fasertopologie zwischen den optischen Netzelementen ist bidirektional ausgeführt, d.h. zwei benachbarte optische Netzelemente sind in beide Richtungen über Glasfasern miteinander verbunden, beispielhaft mit Bezugszeichen 310 und 320 bezeichnet. In heute eingesetzten Aggregatiosnnetzwerken sind die optischen Netzelemente 101-105 typischerweise als FOADM (Fixed Optical Add/Drop Multiplexer) ausgebildet.

Um eine Flexibilität bezüglich sich ändernder Übertragungsraten zu gewährleisten, gibt es Ansätze alle eingesetzten optischen Netzelemente ausschließlich mit passiven optischen Bauelementen aufzubauen.

In Fig. 2 ist beispielhaft ein schematischer Aufbau einer bevorzugten Ausführungsform eines erfindunsgemäßen optischen Übertragungsnetzwerks 20 dargestellt. Im dargestellten Ausführungsbeispiel ist das Netzwerk 20 ebenfalls als Aggregatiosnnetzwerk ausgebildet und umfasst fünf Regionalknoten R1 und zwei Backbone-Knoten R2. Ein erfindungsgemäßes optisches Übertragungsnetzwerk kann aber ebenso an anderen Hierarchiestufen eines optischen IP-Netzes eingesetzt werden, beispielsweise zur Verbindung von Kunden- und Regionalknoten.

Anders als aus dem Stand der Technik bekannt, kombiniert das in Fig. 2 dargestellte optische Übertragungsnetzwerk 20 verschiedene optische Knotentechniken in besonders vorteilhafter Weise und bildet somit einen hybriden Ansatz.

Die R1-Regionalknoten werden über optische Netzelemente 401 bis 405 an das optische Übertragungsnetzwerk angebunden, welche mit passiver Splitter/Koppler-Knotentechnik ausgestattet sind, mit der Ergänzung, dass die optischen Netzelemente 401 bis 405 zusätzlich jeweils mit wenigstens einem schnellen optischen Schalter zur Richtungsumschaltung vor der Fan-Out-Stufe im Drop-Pfad ausgestattet sind.

Die optische Knotentechnik an den beiden R2-Backbone-Standorten besteht aus ROADMs 510 bzw. 520, deren Aufbau gegenüber einem üblichen Aufbau ebenfalls um wenigstens einen schnellen optischen Schalter zur Richtungsumschaltung vor der Fan-Out-Stufe im Drop-Pfad ergänzt wird.

Ein weiterer wesentlicher Unterschied zum Stand der Technik besteht darin, dass statt einer offenen Horseshoe-Struktur der Ring zwischen den beiden als ROADM ausgebildeten optischen Knoten 510 und 520 geschlossen wird. Die beiden im Ring integrierten ROADMs 510 und 520 erlauben es, den Ring für jeweils eine betrachtete Wellenlänge logisch in eine lineare Struktur zu überführen, so dass es zu keiner Zeit zu optischen Instabilitäten kommen kann.

Benachbarte optische Netzelemente sind jeweils über eine bidirektionale optische Übertragungsleitung miteinander verbunden, für die Verbindung zwischen den optischen Netzelementen 410 und 510 beispielhaft mit den Bezugszeichen 311 und 321 bezeichnet. Auch der Ringschluss zwischen den ROADMs 510 und 520 ist als bidirektionale optische Übertragungsleitung, umfassend die optischen Übertragungsleitungen 312 und 322, ausgebildet.

Durch die bidirektionalen Übertragungsleitungen entlang des Ringnetzwerks wird ein erster und ein zweiter, zum ersten gegenläufiger optischer Signalweg gebildet. Auf diese Weise stehen für jede Kombination eines R1- und eines R2-Knotens zwei alternative optische Übertragungswege zur Verfügung.

Der Ringschluss in Verbindung mit einer automatischen Umschaltung des optischen Übertragungsweges erlaubt die vorteilhafte Anwendung von MLR-O (Multi-Layer Restoration from Optical failure) mit der damit verbundenen maximalen Auslastung der Schnittstellen von 100%. Damit müssen bei gleichem Verkehrsvolumen entsprechend weniger Schnittstellen, d.h. weniger Sende- und Empfangselemente, vorgehalten werden. Schnelle optische Schalter ermöglichen Umschaltzeiten von weniger als 50ms. Eine zusätzliche Reaktion auf dem IP-Layer ist daher nicht erforderlich.

Der einfache technische Aufbau der optischen Netzelemente 401 bis 405 und der Einsatz von MLR-O im Sinn eines schnellen Schutzkonzepts auf dem optischen Layer im Fehlerfall, der zur Erhöhung der maximalen Interface-Last und damit zur Steigerung der Netz-Effizienz eingesetzt werden kann, bieten wesentliche Einsparpotentiale gegenüber dem Stand der Technik.

Die beiden ROADMs 510 und 520 haben aus Sicht einer einzelnen Wellenlänge die Aufgabe, den Faserschluss wieder aufzuheben, damit es in dem verstärkten System zu keinen Instabilitäten durch unkontrolliertes Anschwingen optischer Resonanzen, d.h. zu einem ungewollten Laser-Effekt, kommen kann. Jeweils einer der optischen Knoten 510 bzw. 520 blockiert daher die Wellenlänge im Transit, wobei jede Wellenlänge im Transitpfad an mindestens einem der ROADMs 510 bzw. 520 blockiert wird.

Die Funktionsweise ist in Fig. 2 zusätzlich durch gestrichelt dargestellte Signalwege veranschaulicht. Betrachtet wird eine Datenübertragung vom dem an das optische Netzelement 405 angeschlossenen Regionalknoten zu dem Backbone-Knoten am ROADM 520. Im fehlerfreien Fall erfolgt beispielsweise eine Signalübertragung auf dem kürzeren Verbindungsweg entgegen dem Uhrzeigersinn. Fällt die entsprechende Übertragungsleitung aus, wie symbolisch durch ein Kreuz dargestellt, erfolgt automatisch eine Signalübertragung auf dem alternativen Signalweg im Uhrzeigersinn, welche auch über den anderen ROADM 510 verläuft. Die Umschaltung erfolgt dabei mittels wenigstens eines schnellen optischen Schalters, welcher im ROADM 520 angeordnet ist. Mit anderen Worten werden vom sendenden Knoten die zu übertragenden Signale immer auf beiden alternativen Signalwegen übertragen und beim Empfänger wird mittels wenigstens eines schnellen optischen Schalters automatisch das bessere der beiden Signale ausgewählt. Für eine Datenübertragung zu einem der Regionalknoten erfolgt dementsprechend eine Umschaltung in dem entsprechenden der optischen Netzelemente 401 bis 405.

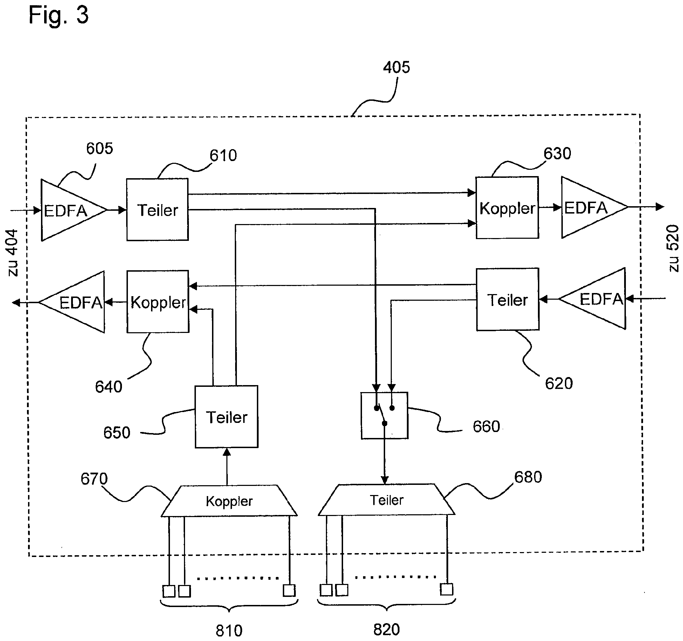

Fig. 3 zeigt beispielhaft für das optische Netzelement 405 schematisch einen bevorzugten Aufbau. Eingangs- und ausgangsseitig ist jeweils ein optischer Verstärker, exemplarisch mit dem Bezugszeichen 605 bezeichnet, angeordnet. Die von den benachbarten optischen Netzelementen 404 bzw. 520 ankommenden optischen Signale werden jeweils mittels optischer Teiler 610 bzw. 620, auch als Splitter bezeichnet, aufgeteilt und im Transitpfad jeweils zu einem der optischen Koppler 630 bzw. 640, sowie im Drop-Pfad zu einem optischen Schalter 660 weitergeleitet. Mittels des optischen Schalters 660 wird automatisch eines der beiden ausgekoppelten optischen Signale ausgewählt und einer Fan-Out-Baugruppe zugeführt. Vorzugsweise wird das ausgewählte optische Signal über einem optischen Teiler 680 einer Mehrzahl kohärenter optischer Empfänger 820 zugeführt.

Im Add-Pfad wird mittels eines optischen Kopplers 670 aus den optischen Signalen einer Mehrzahl von Wellenlängenkanälen, die von entsprechenden optischen Sendern 810 bereitgestellt werden, ein optisches Wellenlängenmultiplexsignal erzeugt. Dieses optische Wellenlängenmultiplexsignal wird mittels eines optischen Teilers 650 aufgeteilt und für den Transit an die Koppler 630 und 640 weitergeleitet.

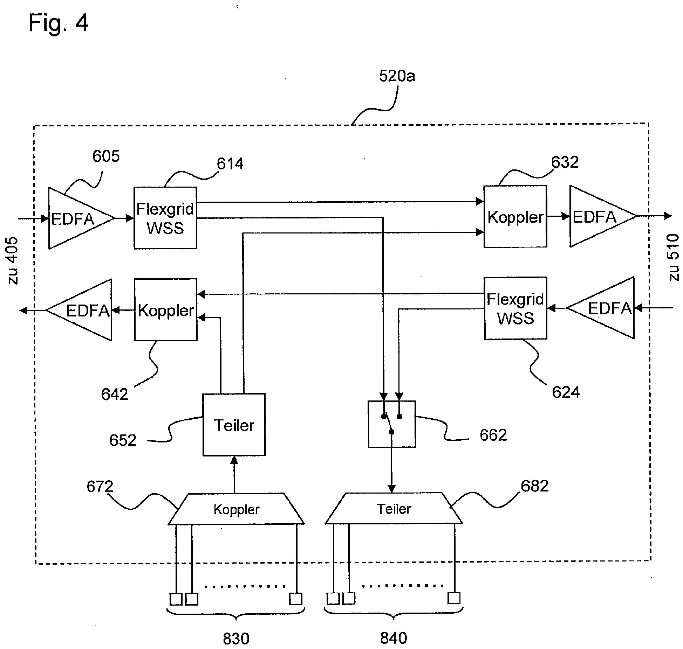

Fig. 4 zeigt beispielhaft den schematischen Aufbau einer ersten bevorzugten Ausführungsform 520a eines der ROADMs 510 bzw. 520. Die Bauelemente 632, 642, 652 und 662 entsprechen den in Fig. 3 dargestellten Bauelementen 630, 640, 650 bzw. 660. Statt der optischen Teiler 610 und 620 in dem in Fig. 3 dargestellten optischen Netzelement 405 umfasst das ROADM 520a jedoch WSS 614 bzw. 624, welche vorzugsweise als Flexgrid-WSS ausgebildet sind. Durch die WSS 614 und 624 wird der Signalpegel vor dem Schalter 662 kalibriert durch Ausführen einer Channel Equalization.

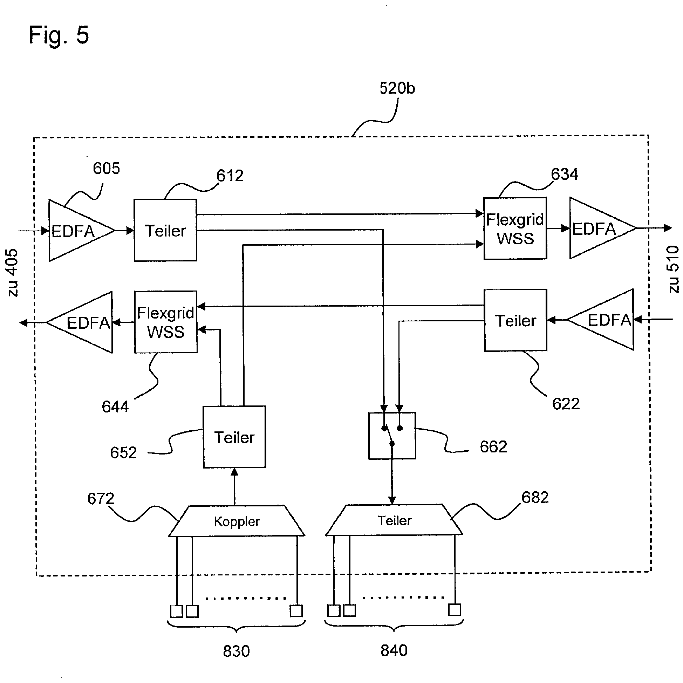

Fig. 5 zeigt beispielhaft den schematischen Aufbau einer zweiten bevorzugten Ausführungsform 520b eines der ROADMs 510 bzw. 520. In dieser Ausführungsform entsprechen die Bauelemente 612, 622, 652 und 662 den in Fig. 3 dargestellten Bauelementen 610, 620, 650 bzw. 660. Statt der optischen Koppler 630 und 640 in dem in Fig. 3 dargestellten optischen Netzelement 405 umfasst das ROADM 520b jedoch WSS 634 bzw. 644, welche vorzugsweise als Flexgrid-WSS ausgebildet sind. Diese Ausführungsvariante unterscheidet sich von der in Fig. 4 dargestellten darin, dass eine Kalibrierung der Kanalpegel in Richtung Fernfaser erfolgt, wobei auf ein Kalibrieren der Empfangspegel verzichtet wird. Im Übrigen ist diese Variante mit der in Fig. 4 dargestellten im Wesentlichen identisch.

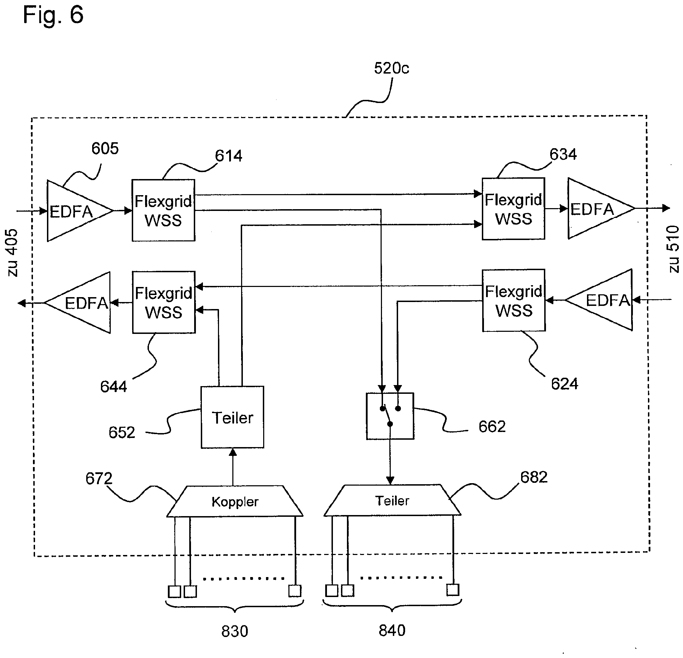

Fig. 6 zeigt beispielhaft den schematischen Aufbau einer dritten bevorzugten Ausführungsform 520c eines der ROADMs 510 bzw. 520. In dieser Variante sind vier WSS 614, 624, 634 und 644 vorgesehen, welche vorzugsweise als Flexgrid-WSS ausgebildet sind. Technisch ist diese Variante am besten, da hier die Empfangspegel und die Kanalpegel in Richtung Fernfaser auskalibriert werden können. Jedoch ist diese Variante auch aufwändiger als die in den Figuren 4 und 5 dargestellten Varianten.

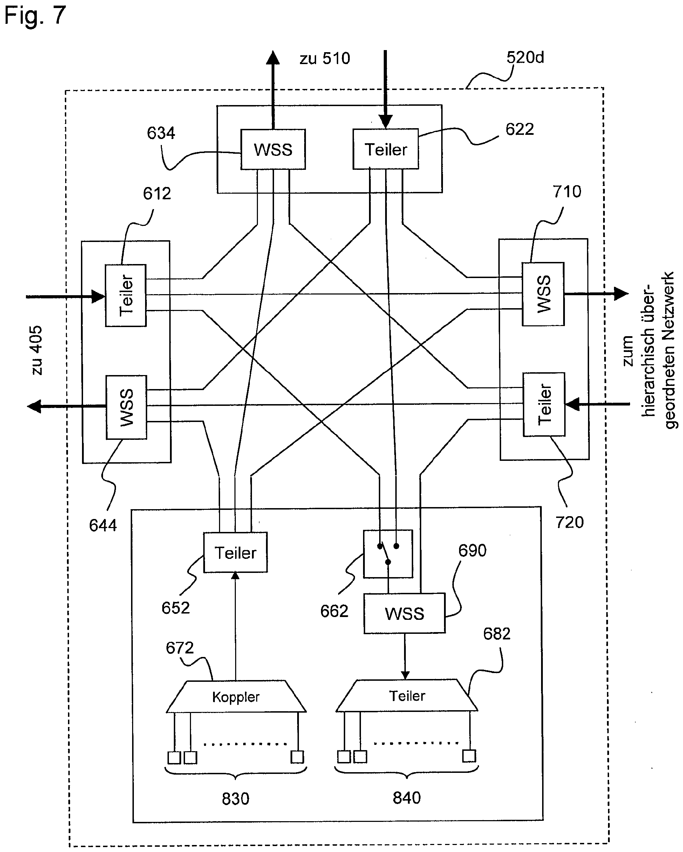

In Fig. 7 ist eine weitere Variante 520d eines der ROADMS 510 bzw. 520 dargestellt. Diese Variante geht von der in Fig. 5 dargestellten Variante 520b aus und umfasst eine weitere optische Verbindung zu dem jeweiligen hierarchisch übergeordneten optischen Netzwerk. Dazu umfasst der ROADM 520d zusätzlich den WSS 710 und den optischen Teiler 720, sowie den WSS 690 zum Auskoppeln optischer Signale, die vom hierarchisch übergeordneten optischen Netzwerk empfangen werden. Bezüglich des in Fig. 2 dargestellten beispielhaften Aggregationsnetzwerks wäre das hierarchisch übergeordnete optische Netzwerk das Backbone-Netzwerk. Üblicher wäre der Einsatz dieser Variante jedoch an anderen Hierarchiestufen eines optischen IP-Netzes, da heute in der Regel eine klare Demarkation bei der Anbindung an ein Backbone-Netzwerk durch eine optisch-elektrische Wandlung erfolgt.

Die ROADMs 510 und 520 umfassen typischerweise eine höhere Anzahl optischer Sender 830 und optischer Empfänger 840 als in den optischen Netzelementen 401 bis 405 vorgesehen sind.

Erfindungsgemäß erfolgt eine automatische Umschaltung an den Drop-Ports, auch als tail-end switching bezeichnet, während die Add-Ports auf übliche Weise ausgelegt sind.

Im Fehlerfall, zum Beispiel einem Faserbruch auf einer Seite des Ringes in Richtung der R2-Backbone-Knoten, wie in Fig. 2 dargestellt, schaltet derjenige Schalter das WDM-Spektrum um, der aufgrund des Fehlers kein WDM-Nutzsignal mehr erhält. Im einfachsten Fall dient als Entscheidungskriterium eine einfache Pegelmessung, d.h. ein Gesamtpegelvergleich der beiden Eingangssignale am Schalter, verbunden mit einer geeigneten Hystereseschleife, um häufiges quasizufälliges Umschalten zu vermeiden.

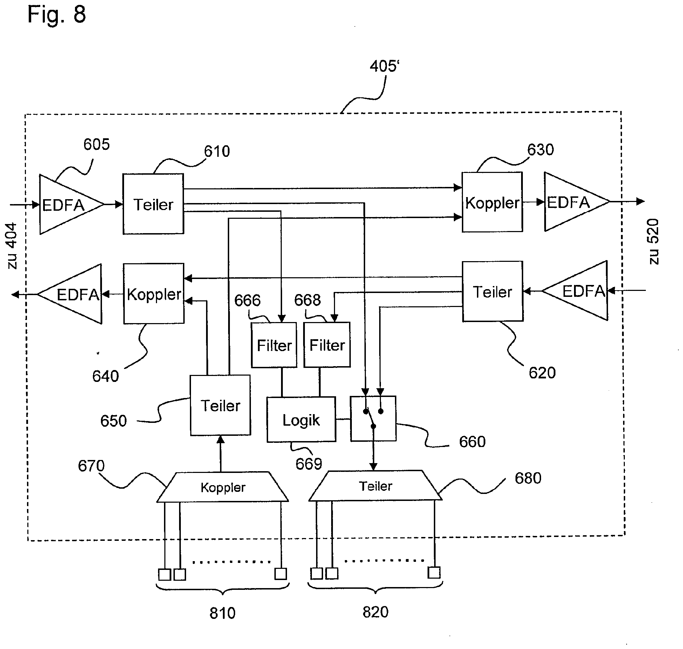

In Fig. 8 ist beispielhaft eine Variante 405' eines optischen Netzelementes 405 dargestellt, in welcher ein alternativer Aufbau bezüglich des optischen Schalters realisiert ist. Dieser alternative Aufbau kann in gleicher Weise ein einem der ROADMs 510 bzw. 520 realisiert werden.

In der in Fig. 8 dargestellten Ausführungsform sind die optischen Teiler 610 und 620 dazu ausgebildet, drei identische Signale bereitzustellen, von denen eines zum Transit-Pfad geführt wird, ein weiteres einem der Eingänge des Schalters 660 zugeführt wird und ein drittes einem der Filter 666 bzw. 668 zugeführt wird. Die Filter 666 und 668 sind derart konfiguriert, dass nur Wellenlängen durchgelassen werden, die über den Add-Pfad eines der ROADMs 510 oder 520 eingekoppelt wurden. Besonders vorteilhaft sind die Filter derart konfiguriert, dass das Filter 666 nur Wellenlängen durchlässt, die über den Add-Pfad des ROADM 510 eingekoppelt werden und das Filter 668 nur Wellenlängen durchlässt, die über den Add-Pfad des ROADM 520 eingekoppelt werden. Eine den Filtern 666 und 668 nachgeschaltete Logik 690 ist dazu ausgebildet die Signalpegel der gefilterten optischen Signale zu messen und zu vergleichen und in Abhängigkeit des Vergleichsergebnisses den optischen Schalter derart anzusteuern, dass automatisch der Eingang des optischen Schalters 660 mit dem Ausgang verbunden wird, an welchem das optische Signal anliegt, welches nach Filtern einen höheren Signalpegel aufweist. Da jede Wellenlänge im fehlerfreien Fall den gesamten Ring durchläuft, kann auf diese Weise sicher erkannt werden ob der jeweilige Signalweg zwischen dem einspeisenden hierarchisch übergeordneten Netzknoten und dem Schalter an irgendeiner Stelle unterbrochen ist, da der Signalpegel des gefilterten Signals in diesem Fall auf Null fällt. Es sei angemerkt, dass dies auch auf den einspeisenden hierarchisch übergeordneten Netzknoten selbst zutrifft.

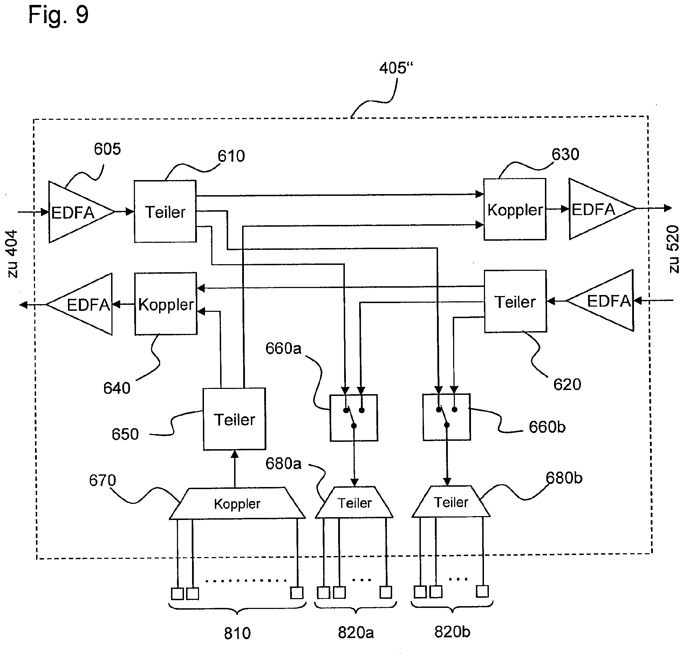

Um für den fehlerfreien Fall eines der ausgekoppelten optischen Signale zu bevorzugen, beispielsweise um jeweils die kürzere Übertragungsstrecke zwischen einem R1- und einem R2-Knoten zu verwenden, kann vorteilhaft vorgesehen sein, zwei optische Schalter vorzusehen, wie dies beispielhaft für das in Fig. 9 dargestellte optische Netzelement 405" dargestellt ist, welches für jede Signalrichtung einen optischen Schalter 660a bzw. 660b umfasst, sowie nachgeschaltet zwei optische Teiler 680a bzw. 680b. Die optischen Schalter 660a und 660b können so konfiguriert sein, dass im fehlerfreien Fall von dem optischen Schalter 660a das vom Teiler 610 empfangene optische Signal durchgeschaltet wird und von dem optischen Schalter 660b das vom Teiler 620 empfangene optische Signal durchgeschaltet wird. Dies kann beispielsweise durch Verwendung eines Potentiometers im Regelkreis des jeweiligen optischen Schalters oder durch Verstärken oder Dämpfen eines der optischen Signale realisiert werden.

Selbstverständlich können die im Zusammenhang mit den Figuren 8 und 9 dargestellten Ausführungsvarianten auch kombiniert werden.

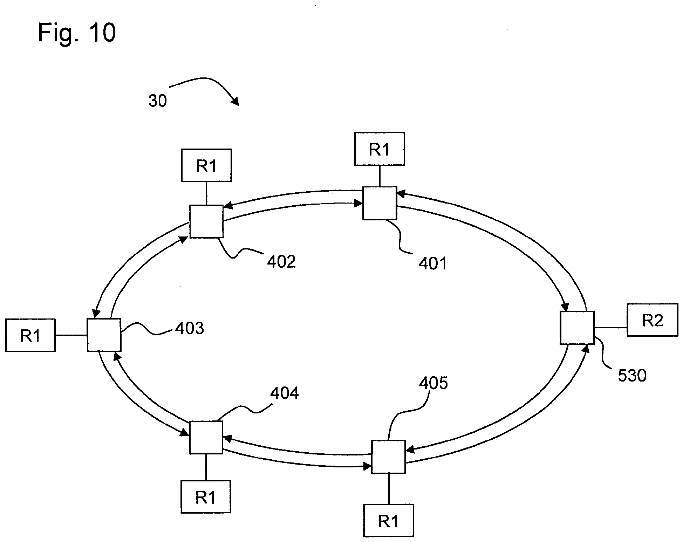

Statt wie oben beschrieben zwei als ROADM ausgebildete optische Netzelemente 510 und 520 mit daran angeschlossen hierarchisch übergeordneten Netzknoten einzusetzen, kann auch nur ein hierarchisch übergeordneter Netzknoten vorgesehen sein. Ein entsprechendes optisches Übertragungsnetzwerk 30 mit nur einem ROADM 530 ist beispielhaft in Fig. 10 dargestellt. Der für das Wirkprinzip der Erfindung erforderliche Ringschluss ist durch den einzigen ROADM 530 direkt realisiert.

Die Erfindung bietet gegenüber dem Stand der Technik eine Reihe von Vorteilen. Durch eine deutlich erhöhte Auslastung der Schnittstellen kann eine deutliche Einsparung hinsichtlich der Hauptkostentreiber, nämlich die optischen WDM-Transponder, erzielt werden.

Durch die schnelle und autarke Heilung auf dem optischen Layer ist nach einem Fehlerfall kein Umrouten auf der IP-Ebene notwendig, d.h. im Fehlerfall muss der redundante R2-Router den Verkehr nicht übernehmen. Eine Schaltzeit von weniger als 50 ms wurde von den Erfindern bereits experimentell getestet und verifiziert. Nach einem Fehlerfall ist daher auch keine nachgelagerte Aktivität im Backbone zwischen den R2-Routern notwendig. Schnelle Umschaltzeiten werden zusätzlich dadurch garantiert, dass der Trigger durch die Physik bestimmt wird und keine komplexe Softwaresteuerung oder "Path Computation" erforderlich ist.

Ferner wird eine Komplexitätsreduktion ermöglicht, weil zum Schutz selbst nur der physikalische Layer verantwortlich ist, d.h. Schutzmechanismen können auf den physikalischen Layer beschränkt bleiben, eine Abstimmung über mehrere Layer hinweg ist nicht nötig. Durch den Einsatz von passiver optischer Technik an den hierarchisch untergeordneten optischen Knoten ist eine Einbindung dieser optischen Knoten in ein Transport-Netzwerk-Management-System nicht notwendig. Es besteht zudem keine Notwendigkeit, in einem Aggregationsnetz verschiedene Serviceklassen zu unterscheiden.

## Patentansprüche

1. Optisches Übertragungsnetzwerk (20, 30) zum Übertragen optischer Signale im Wellenlängen-Multiplexbetrieb, umfassend eine Mehrzahl als Ringnetzwerk angeordnete optische Netzelemente (401-405, 510, 520, 530), wobei die Mehrzahl optischer Netzelemente eine Mehrzahl erster optischer Netzelemente und zwei zweite optische Netzelemente umfasst, wobei an die zwei zweiten optischen Netzelemente jeweils ein hierarchisch übergeordneter Netzknoten angeschlossen ist, wobei das Übertragungsnetzwerk so ausgebildet ist, dass bei Ausfall eines der beiden hierarchisch übergeordneten Netzknoten ein Re-Routing auf dem IP-Layer erfolgt, und wobei das optische Übertragungsnetzwerk zum Einsatz von Multi-Layer Restoration from Optical failure, MLR-O, ausgebildet ist, wobei
- benachbarte optische Netzelemente jeweils über eine bidirektionale optische Übertragungsleitung (311, 321; 312, 322) miteinander verbunden sind,
- durch die bidirektionalen Übertragungsleitungen entlang des Ringnetzwerks ein erster und ein zweiter, zum ersten gegenläufiger optischer Signalweg gebildet werden,
- jedes der Mehrzahl erster optischer Netzelemente (401-405) dazu ausgebildet ist, mittels passiver optischer Koppler (630, 640) ein optisches Wellenlängenmultiplexsignal gleichzeitig in beide optische Signalwege einzukoppeln, und mittels passiver optischer Teiler (610, 620) jeweils ein optisches Wellenlängenmultiplexsignal aus jedem der beiden Signalwege auszukoppeln und automatisch eines der ausgekoppelten optischen Wellenlängenmultiplexsignale zur Weiterverarbeitung auszuwählen,
- jedes der zwei zweiten optischen Netzelemente (510, 520, 530) als rekonfigurierbarer optischer Add/Drop-Multiplexer ausgebildet ist, welcher ferner dazu ausgebildet ist, jeweils ein optisches Wellenlängenmultiplexsignal aus jedem der beiden Signalwege auszukoppeln und automatisch eines der ausgekoppelten optischen Signale zur Weiterverarbeitung auszuwählen, und
- die zwei zweiten optischen Netzelemente (510, 520, 530) derart konfiguriert sind, dass der erste und zweite Signalweg für jede verwendete Übertragungs-Wellenlänge in wenigstens einem der zwei zweiten optischen Netzelemente (510, 520, 530) unterbrochen wird.

2. Optisches Übertragungsnetzwerk nach Anspruch 1, wobei an jeden der ersten optischen Netzelemente (401-405) ein Regionalknoten eines IP-Netzwerks zur Aggregation von Signalen einer Mehrzahl von Endnutzern angebunden ist, und wobei an jeden der zweiten optischen Netzelemente als hierarchisch übergeordneter Netzknoten ein Backbone-Knoten angebunden ist, welcher Bestandteil eines übergeordneten IP-Backbone-Netzwerks ist.

3. Optisches Übertragungsnetzwerk nach Anspruch 1 oder 2, wobei wenigstens eines der ersten (401-405) und/oder zweiten (510, 520, 530) optischen Netzelemente zum automatischen Auswählen eines der ausgekoppelten optischen Signale wenigstens einen optischen Schalter (660, 662, 660a, 660b) mit zwei Eingängen und einem Ausgang umfassen, wobei je eines der ausgekoppelten optischen Signale einem der Eingänge zugeführt wird, und wobei das wenigstens eine optische Netzelement dazu ausgebildet ist, in Abhängigkeit der ausgekoppelten optischen Signale automatisch einen der Eingänge mit dem Ausgang zu verbinden.

4. Optisches Übertragungsnetzwerk nach Anspruch 3, wobei das wenigstens eine optische Netzelement (401-405, 510, 520, 530) dazu ausgebildet ist, die Signalpegel der ausgekoppelten optischen Signale zu messen und zu vergleichen und in Abhängigkeit des Vergleichsergebnisses den optischen Schalter derart anzusteuern, dass der Eingang des optischen Schalters, an welchem das optische Signal mit dem höheren Signalpegel anliegt, automatisch mit dem Ausgang des optischen Schalters verbunden wird.

5. Optisches Übertragungsnetzwerk nach Anspruch 3, wobei das wenigstens eine optische Netzelement (401-405, 510, 520, 530) dazu ausgebildet ist, die ausgekoppelten optischen Signale mittels optischer Filter (666, 668) zu filtern und die Signalpegel der gefilterten optischen Signale zu messen und zu vergleichen und in Abhängigkeit des Vergleichsergebnisses den optischen Schalter derart anzusteuern, dass automatisch der Eingang des optischen Schalters mit dem Ausgang verbunden wird, an welchem das optische Signal anliegt, welches nach Filtern einen höheren Signalpegel aufweist, wobei die optischen Filter derart konfigurierbar sind, dass nur Wellenlängen durchgelassen werden, die von einem der zweiten optischen Netzelemente (510, 520, 530) in das Ringnetzwerk eingespeist werden.

6. Optisches Übertragungsnetzwerk nach einem der Ansprüche 3 bis 5, wobei der optische Schalter (660, 662, 660a, 660b) eine Schaltzeit unter 100 ms, insbesondere unter 50 ms, insbesondere unter 20 ms, aufweist.

7. Optisches Übertragungsnetzwerk nach einem der vorstehenden Ansprüche, umfassend genau zwei zweite optische Netzelemente (510, 520), welche als benachbarte optische Netzelemente angeordnet sind.

8. Optisches Übertragungsnetzwerk nach Anspruch 7, wobei die zwei zweiten optischen Netzelemente (510, 520) an räumlich getrennten Standorten angeordnet sind.

9. Optisches Übertragungsnetzwerk nach einem der vorstehenden Ansprüche, wobei jedes zweite optische Netzelement (510, 520, 530) als spektral flexibler rekonfigurierbarer optischer Add/Drop-Multiplexer ausgebildet ist.

## Claims

1. Optical transmission network (20, 30) for transmitting optical signals in wavelength-division multiplex mode, comprising a plurality of optical network elements (401-405, 510, 520, 530) arranged as a ring network, the plurality of optical network elements comprising a plurality of first optical network elements and two second optical network elements, wherein a hierarchically higher-level network node is connected to each of the two second optical network elements, wherein the transmission network is designed in such a way that, in the event of failure of one of the two hierarchically superordinate network nodes, re-routing takes place on the IP layer, and wherein the optical transmission network is designed for the use of multi-layer restoration from optical failure, MLR-O, wherein
- adjacent optical network elements are respectively connected to each other via a bidirectional optical transmission line (311, 321; 312, 322),
- a first optical signal path and a second optical signal path, the second optical signal path running in opposite direction to the first one, are formed along the ring network by the bidirectional transmission lines,
- each of the plurality of first optical network elements (401-405) is adapted to simultaneously couple an optical wavelength division multiplex signal into both optical signal paths by means of passive optical couplers (630, 640), and to couple out a respective optical wavelength division multiplex signal from each of the two signal paths by means of passive optical dividers (610, 620) and to automatically select one of the coupled-out optical wavelength division multiplex signals for further processing,
- each of the two second optical network elements (510, 520, 530) is designed as a reconfigurable optical add/drop multiplexer which is further adapted to couple out one optical wavelength division multiplexed signal from each of the two signal paths and to automatically select one of the coupled-out optical signals for further processing, and
- the two second optical network elements (510, 520, 530) are configured such that the first and second signal paths are interrupted for each transmission wavelength used in at least one of the two second optical network elements (510, 520, 530).

2. Optical transmission network according to claim 1, wherein a regional node of an IP network for aggregating signals of a plurality of end users is connected to each of the first optical network elements (401-405), and wherein a backbone node, which is part of a higher-level IP backbone network, is connected to each of the second optical network elements as a hierarchically higher-level network node.

3. Optical transmission network according to claim 1 or 2, wherein at least one of the first (401-405) and/or second (510, 520, 530) optical network elements comprises at least one optical switch (660, 662, 660a, 660b) with two inputs and one output for automatically selecting one of the coupled-out optical signals, wherein one of the coupled-out optical signals is supplied to each of the inputs, and wherein the at least one optical network element is adapted to automatically connect one of the inputs to the output depending on the coupled-out optical signals.

4. Optical transmission network according to claim 3, wherein the at least one optical network element (401-405, 510, 520, 530) is adapted to measure and compare the signal levels of the coupled-out optical signals and, depending on the comparison result, to control the optical switch in such a way that the input of the optical switch at which the optical signal with the higher signal level is present is automatically connected to the output of the optical switch.

5. Optical transmission network according to claim 3, wherein the at least one optical network element (401-405, 510, 520, 530) is adapted to filter the coupled-out optical signals by means of optical filters (666, 668) and to measure and compare the signal levels of the filtered optical signals and, depending on the comparison result, to control the optical switch in such a way that the input of the optical switch is automatically connected to the output at which the optical signal is present which has a higher signal level after filtering, wherein the optical filters are configurable in such a way that only wavelengths which are fed into the ring network by one of the second optical network elements (510, 520, 530) are passed.

6. Optical transmission network according to any one of claims 3 to 5, wherein the optical switch (660, 662, 660a, 660b) has a switching time below 100 ms, in particular below 50 ms, in particular below 20 ms.

7. Optical transmission network according to any one of the preceding claims, comprising exactly two second optical network elements (510, 520) arranged as adjacent optical network elements.

8. Optical transmission network according to claim 7, wherein the two second optical network elements (510, 520) are arranged at spatially separated locations.

9. Optical transmission network according to any one of the preceding claims, wherein each second optical network element (510, 520, 530) is designed as a spectrally flexible reconfigurable optical add/drop multiplexer.

## Revendications

1. Réseau de transmission optique (20, 30) destiné à transmettre des signaux optiques lors du fonctionnement en mode multiplex à répartition en longueur d'ondes, comprenant une multitude d'éléments de réseau optiques (401 - 405, 510, 520, 530) disposés en tant que réseau en anneau, dans lequel la multitude d'éléments de réseau optiques comprend une multitude de premiers éléments de réseau optiques et deux deuxièmes éléments de réseau optiques, dans lequel respectivement un noeud de réseau supérieur hiérarchiquement est raccordé aux deux deuxièmes éléments de réseau optiques, dans lequel le réseau de transmission est réalisé de telle sorte qu'en cas de défaillance d'un des deux noeuds de réseau supérieurs hiérarchiquement, un réacheminement est effectué sur la couche IP, et dans lequel le réseau de transmission optique est réalisé pour employer un MLR-0 [Multi-Layer Restoration from Optical failure - rétablissement de multiples couches depuis la défaillance optique],
dans lequel
- des éléments de réseau optiques adjacents sont raccordés les uns aux autres respectivement par l'intermédiaire d'un câble de transmission optique bidirectionnel (311, 321 ; 312, 322),
- un premier chemin de signaux optiques et un deuxième chemin de signaux optiques opposé au premier sont formés le long du réseau en anneau par les câbles de transmission bidirectionnels,
- chacun de la multitude de premiers éléments de réseau optiques (401 - 405) est réalisé pour injecter, au moyen de coupleurs optiques passifs (630, 640), un signal multiplex optique à répartition en longueur d'ondes simultanément dans deux chemins de signaux optiques et pour découpler, au moyen de diviseurs optiques passifs (610, 620), respectivement un signal multiplex optique à répartition en longueur d'ondes hors de chacun des deux chemins de signaux et pour sélectionner automatiquement un des signaux multiplex optiques à répartition en longueur d'ondes découplés pour le traitement ultérieur,
- chacun des deux deuxièmes éléments de réseau optiques (510, 520, 530) est réalisé en tant qu'un multiplexeur optique à insertion-extraction pouvant être reconfiguré, lequel est réalisé en outre pour découpler respectivement un signal multiplex optique à répartition en longueur d'ondes de chacun des deux chemins de signaux et pour sélectionner automatiquement un des signaux optiques découplés pour le traitement ultérieur, et
- les deux deuxièmes éléments de réseau optiques (510, 520, 530) sont configurés de telle manière que le premier et le deuxième chemin de signaux sont interrompus pour chaque longueur d'onde de transmission utilisée en au moins un des deux deuxièmes éléments de réseau optiques (510, 520, 530).

2. Réseau de transmission optique selon la revendication 1, dans lequel un noeud régional d'un réseau IP destiné à l'agrégation de signaux d'une multitude d'utilisateurs finaux est rattaché à chacun des premiers éléments de réseau optiques (401 - 405), et dans lequel un noeud backbone, lequel fait partie intégrante d'un réseau backbone IP supérieur, est rattaché à chacun des deuxièmes éléments de réseau optiques en tant que noeud de réseau supérieur hiérarchiquement.

3. Réseau de transmission optique selon la revendication 1 ou 2, dans lequel au moins un des premiers (401 - 405) et/ou deuxièmes (510, 520, 530) éléments de réseau optiques comprend au moins un commutateur optique (660, 662, 660a, 660b) avec deux entrées et une sortie pour sélectionner automatiquement un des signaux optiques découplés, dans lequel respectivement un des signaux optiques découplés est amené à une des entrées, et dans lequel l'au moins un élément de réseau optique est réalisé pour raccorder automatiquement une des entrées à la sortie en fonction des signaux optiques découplés.

4. Réseau de transmission optique selon la revendication 3, dans lequel l'au moins un élément de réseau optique (401 - 405, 510, 520, 530) est réalisé pour mesurer le niveau de signal des signaux optiques découplés et pour les comparer et piloter, en fonction du résultat de la comparaison, le commutateur optique de telle manière que l'entrée du commutateur optique, sur laquelle le signal optique est appliqué avec le niveau de signal plus élevé, est raccordée automatiquement à la sortie du commutateur optique.

5. Réseau de transmission optique selon la revendication 3, dans lequel l'au moins un élément de réseau optique (401 - 405, 510, 520, 530) est réalisé pour filtrer les signaux optiques découplés au moyen de filtres optiques (666, 668) et pour mesurer les niveaux de signaux des signaux optiques filtrés et pour les comparer et pour piloter, en fonction du résultat de la comparaison, le commutateur optique de telle manière que l'entrée du commutateur optique est automatiquement raccordée à la sortie, sur laquelle le signal optique est appliqué, lequel présente après filtrage un niveau de signal plus élevé, dans lequel les filtres optiques peuvent être configurés de telle manière que ne passent que des longueurs d'ondes, qui sont injectées dans le réseau en anneau depuis un des deuxièmes éléments de réseau optiques (510, 520, 530).

6. Réseau de transmission optique selon l'une quelconque des revendications 3 à 5, dans lequel le commutateur optique (660, 662, 660a, 660b) présente un temps de commutation inférieur à 100 ms, en particulier inférieur à 50 ms, en particulier inférieur à 20 ms.

7. Réseau de transmission optique selon l'une quelconque des revendications précédentes, comprenant précisément deux deuxièmes éléments de réseau optiques (510, 520), lesquels sont disposés en tant qu'éléments de réseau optiques adjacents.

8. Réseau de transmission optique selon la revendication 7, dans lequel les deux deuxièmes éléments de réseau optiques (510, 520) sont disposés sur des sites séparés spatialement.

9. Réseau de transmission optique selon l'une quelconque des revendications précédentes, dans lequel chaque deuxième élément de réseau optique (510, 520, 530) est réalisé en tant que multiplexeur optique à insertion/extraction pouvant être reconfiguré avec flexibilité sur le plan spectral.
